# EUROPÄISCHE PATENTSCHRIFT

(11) **EP 0 957 302 B1**
(45) Veröffentlichungstag und Bekanntmachung des Hinweises auf die Patenterteilung: **12.11.2003**
(21) Anmeldenummer: 99104146.8
(22) Anmeldetag: 02.03.1999
(51) Int. Cl.: F16K 51/00, F16K 41/00

(54) **Sperreinrichtung zwischen einem unsterilen Bereich und einem sterilen Bereich**
Shut-off device between a septic and an aseptic area
Dispositif d'arrêt entre une zone non stérilisée et une zone stérilisée

(30) Priorität: 13.05.1998 DE 19821280
(43) Veröffentlichungstag der Anmeldung: 17.11.1999
(73) Patentinhaber: GRONINGER & CO. GMBH, D-74564 Crailsheim (DE)
(72) Erfinder: Neber, Fritz, 74523 Schwäbisch Hall (DE); Miksch, Rupert, 74589 Satteldorf (DE); Schmid, Joachim, 74599 Wallhausen (DE)
(74) Vertreter: Kratzsch, Volkhard, Dipl.-Ing.

(56) Entgegenhaltungen:
- DE-A- 2 002 464
- DE-A- 2 352 007

## Beschreibung

Die Erfindung bezieht sich auf eine Sperreinrichtung zwischen einem unsterilen Bereich und einem sterilen Bereich. Eine derartige Sperreinrichtung ist z.B. mit Vorteil einsetzbar bei einer Aseptik-Füll- und Verschließmaschine, wie sie insbesondere in der Pharmaindustrie verwendet werden.

Es ist eine Sperreinrichtung dieser Art in Zusammenhang mit einem Ventil bekannt, das im Zusammenhang mit einer sterilen Flüssigkeit benutzt wird, die durch den Ventilraum hindurchgeführt wird, in den die Ventilspindel hineinragt, an deren Ende das Ventilverschlußglied sitzt. Bei einem derartigen Ventil besteht bei der Funktion die Gefahr, daß vom unsterilen Bereich her an die Ventilspindel Bakterien gelangen können, die beim Ventilhub in den Ventilraum und damit in die dort geführte sterile Flüssigkeit eingebracht werden. Um derartiges zu verhindern, ist es bekannt (DE-OS 2002 464), den außerhalb des Ventilgehäuses befindlichen Bereich der Ventilspindel mit einem Rohr zu umgeben und zwischen dem Rohr und der Spindel einen Kanal auszubilden, wobei dieser Ringkanal an beiden Enden mittels Dichtungen gegenüber der Ventilspindel abgedichtet ist. An einem Ende wird in diesen Ringkanal als Medium heißes Wasser oder auch Dampf eingeleitet und am anderen Ende des Kanales abgeleitet. Das im Kanal geführte Medium ist somit ein gänzlich anderes als das Medium, z.B. die sterile Flüssigkeit, im Ventilraum, der zum Kanal hin mittels einer Dichtung abgedichtet ist.

Eine solche bekannte Sperreinrichtung ist für Füll- und Verschließmaschinen, insbesondere im Pharmabereich, nicht verwendbar, bei denen der unsterile Bereich, z.B. Antriebsbereich und/oder Maschinenbereich, auf einer Seite der Abgrenzung und der sterile Bereich, z.B. Füll- und Verschließbereich, auf der anderen Seite der Abgrenzung vorgesehen sind und das bewegliche Antriebsglied durch die Abgrenzung hindurch zwischen beiden Bereichen bewegt wird, wodurch die Gefahr besteht, daß aus dem unsterilen Bereich einzelne Partikel bzw. Keime über das bewegte Antriebsglied in den sterilen Bereich verschleppt werden. Um dem entgegenzuwirken, ist gemäß der Erfindung eine Sperreinrichtung mit den Merkmalen des Anspruchs 1 vorgesehen. Dadurch erfolgt vom sterilen Bereich in Richtung zum unsterilen Bereich um das Antriebsglied herum eine gezielte Absaugung in Richtung zum unsterilen Bereich, so daß die Möglichkeit ausgeschlossen ist, daß Partikel gegen die Strömungsrichtung in den sterilen Raum verschleppt werden. Die Sperreinrichtung gemäß der Erfindung ist einfach im Aufbau und betriebssicher. Sie macht es nicht nur möglich, eine etwaige Partikelverschleppung vom unsterilen Bereich in den Bereich des Kanals und zum sterilen Bereich hin auszuschließen, sondern sie ist zugleich in der Lage, bei der Sterilisation im sterilen Bereich, die vor Betriebsbeginn der Einrichtung erfolgt, ein Eindringen des Sterilisationsmediums, z.B. eines H₂O₂-Luftgemisches, in den unsterilen Bereich zu verhindern, wobei zugleich bei dieser Sterilisation auch im Bereich des Kanales und somit der Außenfläche des Antriebsgliedes eine Sterilisation gewährleistet ist.

Weitere besondere Erfindungsmerkmale und Ausgestaltungen ergeben sich aus den Unteransprüchen.

Weitere Einzelheiten und Vorteile der Erfindung ergeben sich aus der nachfolgenden Beschreibung.

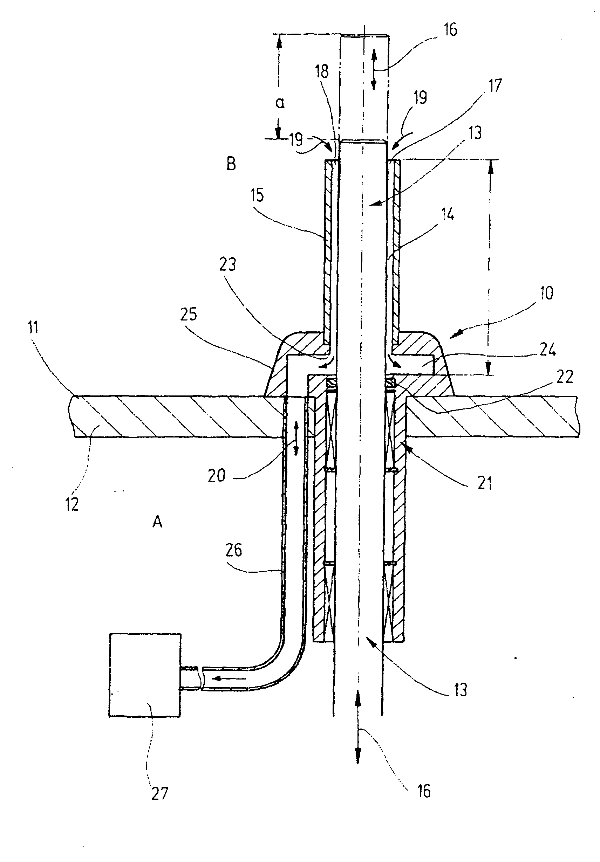

Der vollständige Wortlaut der Ansprüche ist vorstehend allein zur Vermeidung unnötiger Wiederholungen nicht wiedergegeben, sondern lediglich durch Nennung der Anspruchsnummern darauf Bezug genommen, wodurch jedoch alle diese Anspruchsmerkmale als an dieser Stelle ausdrücklich und erfindungswesentlich offenbart zu gelten haben. Dabei sind alle in der vorstehenden und folgenden Beschreibung erwähnten Merkmale sowie auch die allein aus der Zeichnung entnehmbaren Merkmale weitere Bestandteile der Erfindung, auch wenn sie nicht besonders hervorgehoben und insbesondere nicht in den Ansprüchen erwähnt sind.

Die Erfindung ist nachfolgend anhand eines in der Zeichnung gezeigten Ausführungsbeispieles näher erläutert. Die Zeichnung zeigt einen schematischen senkrechten Schnitt einer einen unteren unsterilen Bereich und einen oberen sterilen Bereich voneinander abgrenzenden Platte mit einer Sperreinrichtung zwischen beiden Bereichen.

In der Zeichnung ist schematisch eine Sperreinrichtung 10 gezeigt, die zwischen einem unteren, unsterilen Bereich A und einem darüber befindlichen sterilen Bereich B mit Abgrenzung 11, z.B. in Form einer Platte 12, zwischen beiden Bereichen wirksam ist. Durch die Abgrenzung 11, z.B. Platte 12, erstreckt sich ein bewegliches Antriebsglied 13, das vom unsterilen Bereich A her zu seiner Bewegung antreibbar ist, in den sterilen Bereich B, wobei das Antriebsglied 13 zumindest auf einem Abschnittsbereich von einem Kanal 14 umgeben ist, durch den ein Medium hindurchleitbar ist. Zur Bildung des Kanals 14 ist ein Rohr 15 vorgesehen, das das Antriebsglied 13 umgibt, wobei der Kanal 14 zwischen dem Rohr 15 und der Außenseite des Antriebsgliedes 13 gebildet ist.

Das Antriebsglied 13 ist z.B. als Längsteil und der diesen Längsteil umgebende Kanal 14 als Ringkanal ausgebildet. Das Antriebsglied 13 besteht z.B. aus einem in Pfeilrichtung 16 translatorisch angetriebenen Hubglied, z.B. einer Hubstange. Der Maximalhub ist mit a angedeutet. Bei der Abgrenzung 11, insbesondere Platte 12, handelt es sich z.B. um die Tischplatte einer Aseptik-Füll- und Verschließmaschine, bei der für die Bildung des sterilen Bereichs B auf der Platte 12 ein nicht weiter gezeigter Isolator aufgebaut ist, um den sterilen Füll- und Verschließbereich B vor Kontamination durch den darunter befindlichen unsterilen Bereich A zu schützen, der z.B. aus einem Maschinenbereich, insbesondere Antriebsbereich, besteht. Das Antriebsglied 13 ist in Pfeilrichtung 16 vom unsterilen Bereich A her translatorisch antreibbar, um die erforderlichen Funktionen im Füll- und Verschließbereich B realisieren zu können. Im Betrieb wird das Antriebsglied 13 zwischen dem unsterilen Bereich A unter der Platte 12 und dem darüber befindlichen sterilen Füll- und Verschließbereich B hin und her bewegt. Selbst bei noch so guter Abdichtung ist dabei nie auszuschließen, daß zwischen dem Antriebsglied 13 und einer entsprechenden Abdichtung einzelne Partikel bzw. Keime aus dem unsterilen Bereich B in den sterilen Bereich A verschleppt werden. Um dies zuverlässig zu verhindern, ist der Kanal 14 an einem Endbereich 17, der sich in den sterilen Bereich B erstreckt, über mindestens eine Öffnung 18 zum sterilen Bereich B hin offen. über diese mindestens eine Öffnung 18 wird aus dem sterilen Bereich B in Pfeilrichtung 19 ein Medium, z.B. bei Produktionsbeginn ein Sterilisationsmedium und bei der Produktion ein Schutzmedium, z.B. Luft, in den Kanal 14 eingeführt und mit Druckgefälle in Richtung zum unsterilen Bereich A durch den Kanal 14 im Pfeilrichtung 20 hindurchgeführt. Es erfolgt somit eine gezielte Absaugung der Luft aus dem Sterilbereich B in Richtung der Pfeile 19, 20 zum unsterilen Bereich A hin, wodurch die Möglichkeit ausgeschlossen ist, daß Partikel gegen die Strömung des Mediums vom unsterilen Bereich A in den sterilen Bereich B verschleppt werden.

Der Innendurchmesser des Rohres 15 ist geringfügig größer als der Außendurchmesser des Antriebsgliedes 13, insbesondere in Form der Hubstange. Die mindestens eine Öffnung 18 des Kanals 14 besteht aus einer Ringöffnung am Ende des Rohres 15, wobei der Kanal 14 als Ringkanal, insbesondere Ringspalt, ausgebildet ist.

Wesentlich ist, daß die Länge des Kanals 14, die mit 1 angedeutet ist, größer bemessen ist als der maximale Hub a des Antriebsgliedes 13, insbesondere der Hubstange.

Der Kanal 14 ist zu dem der Öffnung 18 gegenüberliegenden Endbereich hin mittels mindestens einer Dichtungseinrichtung 21 abgedichtet, die das Antriebsglied 13 umschließt. Die mindestens eine Dichtungseinrichtung 21 weist zumindest eine Gleitringdichtung 22 auf. Der Kanal 14 weist am der Öffnung 18 gegenüberliegenden Endbereich, der Dichtungseinrichtung 21 vorgelagert, mindestens eine Öffnung 23 auf, durch die das durch den Kanal 14 hindurchgeführte Medium absaugbar ist. Die Öffnung 23 mündet in einen Ringraum 24, der von einer z.B. ringförmigen Kappe 25 umgrenzt ist. An die Öffnung 23, insbesondere an den Ringraum 24, ist über eine schematisch angedeutete Leitung 26 ein schematisch angedeuteter Vakuumerzeuger 27 anschließbar oder angeschlossen.

Beim gezeigten Ausführungsbeispiel ist als Abgrenzung 11 eine horizontal verlaufende Platte 12 vorgesehen. Es versteht sich gleichwohl, daß bei einem anderen, nicht gezeigten Ausführungsbeispiel die Abgrenzung 11 auch in anderer Form erfolgen kann, z.B. auch mittels einer vertikal oder schräg gerichteten Platte. Das Antriebsglied 13, insbesondere das Längsteil, ist beim gezeigten Ausführungsbeispiel quer zu Platte 12, z.B. etwa rechtwinklig, gerichtet. Bei einem anderen, nicht gezeigten Ausführungsbeispiel, kann das Antriebsglied 13 aber auch etwa parallel oder schräg zur Platte 12 ausgerichtet sein.

Vor Produktionsbeginn wird zur Sterilisation des Isolators und des sterilen Bereichs B ein Sterilisationsmedium, z.B. ein H₂O₂-Luftgemisch, im Bereich B zugeführt. Durch die Abgrenzung 11 kann dieses Sterilisationsmedium nicht in den unsterilen Bereich A gelangen. Während dieser Sterilisation wird kontinuierlich Luft aus dem sterilen Bereich B durch den Kanal 14 in Richtung der Pfeile 19, 20 abgesaugt, so daß in diesem Bereich ebenfalls eine Sterilisation gewährleistet ist. Ferner ist durch diese Absaugung des Sterilisationsmediums sichergestellt, daß dieses nicht in die umgebenden Bereiche gelangen kann. Wenn gewünscht, kann das Sterilisationsmedium, das über die Leitung 26 abgesaugt wird, auch zurückgeführt werden.

Auf jeden Fall ist sichergestellt, daß das Sterilisationsmedium nicht in den Raum A und in den Raum gelangen kann, wo sich Personen befinden. Andererseits ist bei dieser Sterilisierung gewährleistet, daß das Innere des Rohres 15 und die Außenseite des Antriebsgliedes 13 im Verlauf des Kanales 14 ebenfalls sterilisiert werden und somit dort eine zuverlässige Entkeimung geschieht.

Im Betrieb der Füll- und Verschließeinrichtung herrscht im sterilen Bereich B eine laminare, gegen die Platte 12 gerichtete Strömung (sog. Laminarflow) des Schutzmediums, z.B. Luft. Derartige Luftströmungen werden eingesetzt, um Partikel, bzw. Keime von einer Verbreitung im Raum abzuhalten. Die laminare Luftströmung über der Platte 12 erfolgt z.B. in der Größenordnung von 0,45 m/s, wodurch etwaige entstehende Partikel gezielt von der Mündung des im Füllund Verschließbereich zu füllenden Objektes entfernt gehalten werden bzw. abgesaugt werden. Die Luft für einen Laminarflow wird zuvor durch einen Hochleistungsschwebstofffilter geführt, so daß eine hohe Partikelminimierung in der Luft gewährleistet ist. Die Strömung oberhalb der Platte 12 ist etwa parallel zum Längsverlauf des Kanales 14 auf dessen Öffnung 18 gerichtet, und zwar derart, daß in diesem Bereich zumindest ein Teil des Schutzmediums, z.B. Luft, durch die öffnung 18 und den Kanal 14 abgesaugt wird und im Bereich des Rohres 14 und der Kappe 25 ein zumindest turbulenzarmer Bereich erzeugt ist.

Während der Produktion können an der Oberfläche des Antriebsgliedes 13 durch die Dichtungseinrichtung 21 aus dem unsterilen Bereich A zwar Partikel bzw. Keime verschleppt werden. Jedoch bleibt die konterminierte Oberfläche auch bei maximalem Hub a immer noch innerhalb des Bereiches des Rohres 15, da die Länge 1 des Kanales 14 größer als der maximale Hub a ist. Sollten sich Partikel bzw. Keime, die in den Bereich des Kanales 14 hineingetragen werden, von der kontaminierten Oberfläche des Antriebsgliedes 13 z.B. aufgrund von Vibrationen oder ähnlichem lösen, so können diese dennoch nicht in den sterilen Bereich B gelangen, da die Luftströmung im Kanal 14 durch die dortige gezielte Absaugung derartige Partikel bzw. Keime absaugt.

Häufig befindet sich das Antriebsglied 13, insbesondere die Hubstange, in der Mitte einer Platte 12. Durch die Absaugung durch die Öffnung 18 und den Kanal 14 hindurch wird ein Teil der auf die Platte 12 aufprallenden Luftströmung direkt durch die Öffnung 18 hindurch abgesaugt. Ein etwaiger Luftstau und etwaige dadurch entstehende Wirbel werden somit vermindert. Die Erzeugung einer stabileren Luftführung nahe über der Oberseite der Platte 12 wird dadurch noch verbessert.

## Patentansprüche

1. Sperreinrichtung zwischen einem unsterilen Bereich (A) und einem sterilen Bereich (B) mit einer Abgrenzung (11) zwischen beiden Bereichen (A, B), durch die sich zumindest ein bewegliches Antriebsglied (13), das vom unsterilen Bereich (A) her zu seiner Bewegung antreibbar ist, in den sterilen Bereich (B) erstreckt, wobei das Antriebsglied (13) zumindest auf einem Abschnittsbereich von einem Kanal (14) umgeben ist, durch den ein Medium hindurchleitbar ist,
**dadurch gekennzeichnet,**
**daß** der Kanal (14) an einem Endbereich (17), der sich in den sterilen Bereich (B) erstreckt, über mindestens eine Öffnung (18) zum sterilen Bereich (B) hin offen ist und daß als Medium aus dem sterilen Bereich (B) ein Sterilisations- oder Schutzmedium, z.B. Luft, über die mindestens eine Öffnung (18) in den Kanal (14) eingeführt und mit Druckgefälle (Absaugung) in Richtung zum unsterilen Bereich (A) durch den Kanal (14) hindurchgeführt wird.

2. Sperreinrichtung nach Anspruch 1,
**dadurch gekennzeichnet,**
**daß** das Antriebsglied (13) als Längsteil und der diesen umgebende Kanal (14) als Ringkanal ausgebildet sind.

3. Sperreinrichtung nach Anspruch 1 oder 2,
**dadurch gekennzeichnet,**
**daß** das Antriebsglied (13) aus einem Hubglied, z. B. einer Hubstange, besteht.

4. Sperreinrichtung nach einem der Ansprüche 1 bis 3,
**dadurch gekennzeichnet,**
**daß** das Antriebsglied (13), insbesondere der Längsteil, auf einem Längenabschnitt von einem Rohr (15) umgeben ist und der Kanal (14) zwischen dem Rohr (15) und der Außenseite des Antriebsgliedes (13), insbesondere des Längsteiles, gebildet ist.

5. Sperreinrichtung nach Anspruch 4,
**dadurch gekennzeichnet,**
**daß** der Innendurchmesser des Rohres (15) geringfügig größer ist als der Außendurchmesser des Antriebsgliedes (13), insbesondere des Längsteiles.

6. Sperreinrichtung nach einem der Ansprüche 4 bis 5,
**dadurch gekennzeichnet,**
**daß** die Öffnung (18) des Kanales (14) aus einer Ringöffnung am Ende des Rohres (15) gebildet ist.

7. Sperreinrichtung nach einem der Ansprüche 2 bis 6,
**dadurch gekennzeichnet,**
**daß** der Ringkanal als Ringspalt ausgebildet ist.

8. Sperreinrichtung nach einem der Ansprüche 1 bis 7,
**dadurch gekennzeichnet,**
**daß** die Länge (1) des Kanals (14), insbesondere des Ringspalts, größer bemessen ist als der Maximalhub (a) des Antriebsgliedes (13), insbesondere des Längsteiles.

9. Sperreinrichtung nach einem der Ansprüche 1 bis 8,
**dadurch gekennzeichnet,**
**daß** der Kanal (14) zu einem der öffnung (18) gegenüberliegenden Endbereich hin abgedichtet ist, z.B. mittels mindestens einer das Antriebsglied (13), insbesondere den Längsteil, umschließenden Dichtungseinrichtung (21).

10. Sperreinrichtung nach Anspruch 9,
**dadurch gekennzeichnet,**
**daß** die mindestens eine Dichtungseinrichtung (21) zumindest eine Gleitringdichtung (22) aufweist.

11. Sperreinrichtung nach Ansprüch 9 oder 10,
**dadurch gekennzeichnet,**
**daß** der Kanal (14) am einen Endbereich und der mindestens einen Dichtungseinrichtung (21) vorgelagert mindestens eine öffnung (23) aufweist, durch die das durch den Kanal (14) hindurchgeführte Sterilisations- oder Schutzmedium absaugbar ist.

12. Sperreinrichtung nach Anspruch 11,
**dadurch gekennzeichnet,**
**daß** die Öffnung (23) in einen Ringraum (24) ausmündet.

13. Sperreinrichtung nach Anspruch 11 oder 12,
**dadurch gekennzeichnet,**
**daß** an die Öffnung (23), insbesondere an den Ringraum (24), ein Vakuumerzeuger (27) angeschlossen ist oder anschließbar ist.

14. Sperreinrichtung nach einem der Ansprüche 1 bis 13,
**dadurch gekennzeichnet,**
**daß** die Abgrenzung (11) aus einer horizontalen, vertikalen oder geneigten Platte (12) gebildet ist, auf deren einer Seite sich der unsterile Bereich (A), z. B. Antriebsbereich und/oder Maschinenbereich, und auf deren anderer Seite sich der sterile Bereich (B), z. B. ein Füll- und Verschließbereich, befinden.

15. Sperreinrichtung nach Anspruch 14,
**dadurch gekennzeichnet,**
**daß** das Antriebsglied (13), insbesondere das Längsteil, zur Platte (12) quer, z.B. etwa rechtwinklig, oder etwa parallel ausgerichtet ist.

16. Sperreinrichtung nach einem der Ansprüche 1 bis 15,
**dadurch gekennzeichnet,**
**daß** im sterilen Bereich (B) im Betrieb eine laminare, gegen die Abgrenzung (11),insbesondere Platte (12), gerichtete Strömung (sog. Laminarflow) des Schutzmediums, z.B. Luft, herrscht oder erzeugt wird, und die Strömung etwa parallel zum Längsverlauf des Kanales (14), insbesondere des Ringspaltes, und auf dessen Öffnung (18), insbesondere Ringöffnung, derart gerichtet ist, daß in diesem Bereich zumindest ein Teil des Schutzmediums, z.B. Luft, durch die Öffnung, insbesondere Ringöffnung, und den Kanal (14) abgesaugt wird und ein zumindest turbulenzarmer Bereich erzeugt wird.

## Claims

1. Shut-off device between a non-sterile region (A) and a sterile region (B), with, between the two regions (A, B), a boundary (11), through which at least one movable drive member (13), which is capable of being driven in its movement from the non-sterile region (A), extends into the sterile region (B), the drive member (13) being surrounded, at least over a partial region, by a duct (14), through which a medium is capable of being conducted, **characterized in that** the duct (14) is open, at an end region (17) extending into the sterile region (B), towards the sterile region (B) via at least one orifice (18), and **in that** a sterilizing or protective medium, for example air, is introduced as medium from the sterile region (B) into the duct (14) via the at least one orifice (18) and is led through the duct (14) with a pressure drop (suction) in the direction of the non-sterile region (A).

2. Shut-off device according to Claim 1, **characterized in that** the drive member (13) is designed as a longitudinal part and the duct (14) surrounding this is designed as an annular duct.

3. Shut-off device according to Claim 1 or 2, **characterized in that** the drive member (13) consists of a lifting member, for example a lifting rod.

4. Shut-off device according to one of Claims 1 to 3, **characterized in that** the drive member (13), in particular the longitudinal part, is surrounded over a length portion by a tube (15), and the duct (14) is formed between the tube (15) and the outside of the drive member (13), in particular of the longitudinal part.

5. Shut-off device according to Claim 4, **characterized in that** the inside diameter of the tube (15) is slightly larger than the outside diameter of the drive member (13), in particular of the longitudinal part.

6. Shut-off device according to one of Claims 4 and 5, **characterized in that** the. orifice (18) of the duct (14) is formed from an annular orifice at the end of the tube (15).

7. Shut-off device according to one of Claims 2 to 6, **characterized in that** the annular duct is designed as an annular gap.

8. Shut-off device according to one of Claims 1 to 7, **characterized in that** the length (1) of the duct (14), in particular of the annular gap, is dimensioned larger than the maximum stroke (a) of the drive member (13), in particular of the longitudinal part.

9. Shut-off device according to one of Claims 1 to 8, **characterized in that** the duct (14) is sealed off relative to an end region located opposite the orifice (18), for example by means of at least one sealing device (21) surrounding the drive member (13), in particular the longitudinal part.

10. Shut-off device according to Claim 9,
**characterized in that** the at least one sealing device (21) has at least one slide-ring seal (22).

11. Shut-off device according to Claim 9 or 10, **characterized in that** the duct (14) has at one end region, and preceding the at least one sealing device (21), at least one orifice (23) through which the sterilizing or protective medium led through the duct (14) is capable of being sucked away.

12. Shut-off device according to Claim 11, **characterized in that** the orifice (23) issues into an annular space (24).

13. Shut-off device according to Claim 11 or 12, **characterized in that** a vacuum generator (27) is connected or is connectable to the orifice (23), in particular to the annular space (24).

14. Shut-off device according to one of Claims 1 to 13, **characterized in that** the boundary (11) is formed from a horizontal, vertical or inclined plate (12), on one side of which is located the non-sterile region (A), for example drive region and/or machine region, and on the other side of which is located the sterile region (B), for example a filling and closing region.

15. Shut-off device according to Claim 14, **characterized in that** the drive member (13), in particular the longitudinal part, is oriented transversely, for example approximately at right angles, or approximately parallel to the plate (12).

16. Shut-off device according to one of Claims 1 to 15, **characterized in that**, during operation, a laminar flow of the protective medium, for example air, directed towards the boundary (11), in particular the plate (12), prevails or is generated in the sterile region (B), and the flow is directed approximately parallel to the longitudinal run of the duct (14), in particular of the annular gap, and towards its orifice (18), in particular annular orifice, in such a way that, in this region, at least part of the protective medium, for example air, is sucked away through the orifice, in particular annular orifice, and the duct (14), and an at least low-turbulence region is generated.

## Revendications

1. Dispositif d'arrêt entre une zone non stérile (A) et une zone stérile (B), comprenant une délimitation (11) entre les deux zones (A, B), à travers laquelle au moins un organe d'entraînement mobile (13), qui peut être entraîné en mouvement depuis la zone non stérile (A), s'étend dans la zone stérile (B), l'organe d'entraînement (13) étant entouré, sur au moins une zone partielle, par un canal (14), à travers lequel on peut faire passer une substance,
**caractérisé en ce que**
le canal (14) est ouvert vers la zone stérile (B) par au moins une ouverture (18) au niveau d'une zone d'extrémité (17) qui s'étend dans la zone stérile (B), et **en ce que** l'on introduit dans le canal (14), par le biais de l'au moins une ouverture (18), en tant que substance provenant de la zone stérile (B), une substance de stérilisation ou de protection, par exemple de l'air qui est guidée avec une chute de pression (aspiration) dans la direction de la zone non stérile (A) à travers le canal (14).

2. Dispositif d'arrêt selon la revendication 1,
**caractérisé en ce que**
l'organe d'entraînement (13) est réalisé en tant que partie longitudinale et le canal (14) l'entourant est réalisé en tant que canal annulaire.

3. Dispositif d'arrêt selon la revendication 1 ou 2,
**caractérisé en ce que**
l'organe d'entraînement (13) se compose d'un organe de levage, par exemple une tige de levage.

4. Dispositif d'arrêt selon l'une quelconque des revendications 1 à 3,
**caractérisé en ce que**
l'organe d'entraînement (13), en particulier la partie longitudinale, est entouré sur une portion longitudinale par un tube (15) et le canal (14) est formé entre le tube (15) et le côté extérieur de l'organe d'entraînement (13), en particulier de la partie longitudinale.

5. Dispositif d'arrêt selon la revendication 4,
**caractérisé en ce que**
le diamètre intérieur du tube (15) est légèrement plus grand que le diamètre extérieur de l'organe d'entraînement (13), en particulier de la partie longitudinale.

6. Dispositif d'arrêt selon l'une quelconque des revendications 4 à 5,
**caractérisé en ce que**
l'ouverture (18) du canal (14) est formée par une ouverture annulaire à l'extrémité du tube (15).

7. Dispositif d'arrêt selon l'une quelconque des revendications 2 à 6,
**caractérisé en ce que**
le canal annulaire est réalisé sous forme de fente annulaire.

8. Dispositif d'arrêt selon l'une quelconque des revendications 1 à 7,
**caractérisé en ce que**
la longueur (1) du canal (14), en particulier de la fente annulaire, est dimensionnée de manière à être plus importante que la levée maximale (a) de l'organe d'entraînement (13), en particulier de la partie longitudinale.

9. Dispositif d'arrêt selon l'une quelconque des revendications 1 à 8,
**caractérisé en ce que**
le canal (14) est rendu étanche en direction d'une zone d'extrémité opposée à l'ouverture (18), par exemple au moyen d'au moins un dispositif de joint (21) entourant l'organe d'entraînement (13), en particulier la partie longitudinale.

10. Dispositif d'arrêt selon la revendication 9,
**caractérisé en ce que**
l'au moins un dispositif de joint (21) présente au moins un joint à anneau de glissement (22).

11. Dispositif d'arrêt selon la revendication 9 ou 10,
**caractérisé en ce que**
le canal (14) présente, au niveau d'une zone d'extrémité et placée avant l'au moins un dispositif de joint (21), au moins une ouverture (23) à travers laquelle la substance de stérilisation ou de protection guidée à travers le canal (14) peut être aspirée.

12. Dispositif d'arrêt selon la revendication 11,
**caractérisé en ce que**
l'ouverture (23) débouche dans un espace annulaire (24).

13. Dispositif d'arrêt selon la revendication 11 ou 12,
**caractérisé en ce qu'**
un générateur de vide (27) est raccordé ou peut être raccordé au niveau de l'ouverture (23), en particulier au niveau de l'espace annulaire (24).

14. Dispositif d'arrêt selon l'une quelconque des revendications 1 à 13,
**caractérisé en ce que**
la délimitation (11) est formée par une plaque (12) horizontale, verticale ou inclinée, d'un côté de laquelle se trouve la zone non stérile (A), par exemple la zone d'entraînement et/ou la zone de machine, et de l'autre côté de laquelle se trouve la zone stérile (B), par exemple une zone de remplissage et de fermeture.

15. Dispositif d'arrêt selon la revendication 14,
**caractérisé en ce que**
l'organe d'entraînement (13), en particulier la partie longitudinale, est orienté transversalement, par exemple approximativement perpendiculairement, ou approximativement parallèlement, à la plaque (12).

16. Dispositif d'arrêt selon l'une quelconque des revendications 1 à 15,
**caractérisé en ce qu'**un
un courant laminaire (appelé Laminarflow) de la substance de protection, par exemple de l'air, orienté vers la délimitation (11), en particulier la plaque (12), règne ou est produit dans la zone stérile (B) en fonctionnement, et l'écoulement est orienté approximativement parallèlement à l'étendue longitudinale du canal (14), en particulier de la fente annulaire, et vers son ouverture (18), en particulier l'ouverture annulaire, de telle sorte que dans cette zone au moins une partie de la substance de protection, par exemple de l'air, est aspirée par l'ouverture, en particulier l'ouverture annulaire, et le canal (14), et au moins une zone à peu de turbulences est produite.
